# EUROPEAN PATENT SPECIFICATION

(11) **EP 1 368 959 B1**
(45) Date of publication and mention of the grant of the patent: **15.11.2006**
(21) Application number: 02700953.9
(22) Date of filing: 27.02.2002
(51) Int. Cl.: H04M 17/00, G07F 19/00, G06Q 20/00, G06Q 30/00

(54) **METHOD AND ARRANGEMENT IN A COMMUNICATIONS SYSTEM**
VERFAHREN UND ANORDNUNG IN EINEM KOMMUNIKATIONSSYSTEM
PROCEDE ET CONFIGURATION D'UN SYSTEME DE COMMUNICATION

(30) Priority: 16.03.2001 SE 0100917
(43) Date of publication of application: 10.12.2003
(73) Proprietor: SmartTrust AB, 100 74 Stockholm (SE)
(72) Inventor: ALMGREN, Fredrik, S-116 24 Stockholm (SE)
(74) Representative: Söderman, Päivi Karin Lisbeth
(86) International application number: PCT/SE2002/000337
(87) International publication number: WO 2002/076078

(56) References cited:
- EP-A2- 1 030 272
- EP-A2- 1 030 273
- WO-A2-00/25248

## Description

### FIELD OF THE INVENTION

The present invention relates to a method and system in a communications system in accordance with the preambles of the independent claims. Mote specifically it relates to a secure handling of electronic tickets in an electronic ticketing system.

### BACKGROUND OF THE INVENTION

Electronic tickets are becoming more and more widely used. Exemplary areas are tickets for movie show, concert, airline travel, etc. In some ticket systems the user books a ticket on-line, but in any case he has to go to the ticket shop to purchase and request an issue of the ticket. In another example of sales system the user starts with going to the ticket shop for purchasing a pre-paid electronic ticket (card). A disadvantage with the current sales systems is the inconvenience for the user having to go to the ticket shop for purchasing and getting a ticket issue.

In the European patent document EP 1030273, and also EP 1030272 attempts have been made to overcome the above-mentioned disadvantages. This document shows an electronic asset utilization system, which is constituted of a stationary terminal, a mobile terminal, and a server for paying a charge for issuance of an electronic asset or an order for an electronic asset. The stationary terminal, the mobile terminal, and the server are connected to a communications network. After having received an order for an electronic asset, such as an electronic ticket, and settled the order, the server sends the electronic asset to a specified terminal. Further, upon receipt of a request for service, the server performs a processing operation related to the service request and transmits the thus-requested service to a specified terminal.

WO 00/25248 is concerned with a ticketing method for interactive network events. It includes calls for users to request reservations to such an event from a central database server. The user must respond to a confirmation message to be authorized to attend. The user gets an electronic ticket for the access including a code and a one-time-use key.

However, this document does not mention anything about handling of a ticket that is valid during a time interval or valid for a limited number of times.

Before discussing this problem some terminology that will be used in this document will be defined.
An **event ticket** is a ticket that is valid a single time. The event can be anything: movie show, concert, airline travel etc
A **multiple event ticket** is a ticket that can be used at multiple occasions, but where the number of occasions rather than the time limits the validity of the ticket.
A **season ticket** is a ticket that is valid during a time interval. The time interval can be hours, days, weeks, months etc.
A **ticket issuer** is the entity that creates a ticket as a consequence of a purchase transaction with the user.
A **user** is the entity that purchases and makes use of the ticket.
A **ticket receiver** is the entity that collects the ticket from the user when the user attempts to gain access based on the ticket.

A season ticket and a multiple event ticket are different from an event ticket since they do not get revoked at the time of usage. The season ticket gets revoked when a predefined time limit is exceeded. Season tickets can have different validity time spans. They can be day passes, week passes, month passes etc. Any time span is possible. For a multiple event ticket, the number of occasions instead of the time limits the validity of the ticket. For these two ticket types, it is the behaviour as far as revocation goes that defines the ticket type.
These two ticket types are thus more sensitive than event tickets. An event ticket can be recognised as being valid for a particular event. Once a ticket receiver accepts the ticket, it can be automatically revoked. This system in itself is a protection against a copy attack. If anyone manages to clone his ticket, only the first usage is accepted. In the season and multiple event ticket cases, that mechanism cannot be relied on. The owner of the ticket system requires a security such as to prevent cloning of an issued ticket.

To attain security in open networks, several security solutions have appeared. One example is Public Key Infrastructure (PKI). PKI is a system used to distribute and check public keys that can be used to authenticate users, sign information or encrypt information. In a PKI system, two corresponding (also called asymmetric) keys are used in connection with protecting information. Information, which is encrypted with one of the two keys, can be decrypted only with the other key. One important feature of PKI systems is that it is computationally unfeasible to use knowledge of one of the keys to deduce the other key. In a typical PKI system, each of the systems possesses a set of two such keys. One of the keys is maintained private while the other is freely published.

A PKI distributes one or several public keys and determines whether a certain public key can be trusted for certain usage or not. An important concept in infrastructures built on public key cryptography is that of the Certification Authority (CA). The weakness in a public key system is that, even though it is desirable that the public keys for all users are easily available, it is also required to assert that it is truly known that a particular public key really belongs to the user that one is communicating with. This is what a CA is used for. It uses its good name to guarantee the correctness of a public key by signing a key.

What is further needed is a way of using PKI in an electronic ticketing system.

### SUMMARY OF THE INVENTION

The object of the present invention is to provide an electronic ticket system wherein the security is improved.

The above-mentioned object is achieved by a method and a system according to the characterising part of the independent claims.

The method provided by the present invention comprising the steps of:
- delivering the public key of the user terminal to a ticket issuing unit;
- combining said public key with a ticket, which combined key and ticket constitutes a ticket data package;
- the ticket-issuing unit signing said ticket data package;
- the ticket-issuing unit sending said signed ticket data package to the user terminal;
- the user terminal sending said signed ticket data package to a ticket receiving-unit
- the ticket receiving-unit obtaining said public key comprised in the received signed ticket data package;
- encrypting a challenge data by means of said public key;
- sending said challenge data to the user terminal for verification of the user terminal;
- the user terminal decrypting said encrypted challenge data by means of the private key of the user terminal;
- sending said decrypted challenge data to the ticket-receiving unit; and
- the ticket-receiving unit accepting the ticket if the obtained decrypted challenge data is the same as the challenge data before encrypting it and if the ticket is valid,
makes it possible to handle electronic tickets in a more secure way.

The user terminal provided by the present invention, having a key pair, i.e. a private and a public key, comprising means for delivering its public key of it to a ticket issuing unit, makes it possible for the ticket issuing unit to combine a ticket to be issued with the public key, and achieve a system where the security is improved.

The ticket-issuing unit provided by the present invention, comprising means for obtaining the public key of the user terminal and means for combining said public key with a ticket constituting a ticket data package, makes it possible for the ticket issuing unit to sign the ticket data packet, issue this to the user terminal, and achieve a system where the security is improved.

The ticket-receiving unit provided by the present invention, comprising means for receiving the signed ticket data packet from the user terminal, makes it possible for the ticket-receiving unit to receive the included public key in a safe way since this was contained in the ticket data that was signed by the ticket-issuing unit, and to use the included public key of the user terminal to verify that the user terminal is the one it claims to be, and achieve a system where the security is improved.

An advantage with the present invention is that it is almost impossible for a user to clone a ticket and the present invention is therefore particularly suitable for season tickets and multiple event tickets.

Preferred embodiments are set force in the dependent claims.

According to a first embodiment of the present invention, a certificate of the issuing unit is included in a message, sent by the ticket-receiving unit, for inviting the user terminal to deliver a ticket.

An advantage of the first embodiment is that makes it possible for the user to verify the ticket-receiving unit, before delivering any ticket and that it gives a smaller size of the ticket data that needs to be transferred and stored at the time of ticket issuing.

Another advantage of the first embodiment is that it is not fixed at the time of purchase where the ticket can be used. Thus, more ticket-receivers for a ticket can be added during the validity of the ticket.

According to a second embodiment of the present invention, a list of valid ticket-receiving units is included in the issued ticket data packet.

An advantage with the second embodiment is that it makes it possible for the user to verify the ticket-receiving unit, before delivering any ticket to it, and that fixes the list of ticket-receivers at the time of purchase.

### BRIEF DESCRIPTION OF THE DRAWINGS

- **Figure 1**: is a block diagram illustrating an exemplary electronic ticketing system.
- **Figure 2**: is a signaling sequence diagram showing an example of the ticket issuing proceedings.
- **Figure 3**: is a signaling sequence diagram showing an example of the ticket usage proceedings.
- **Figure 4**: is a signaling sequence diagram showing an example of the ticket revocation proceedings.

### DETAILED DESCRIPTION OF PREFERRED EMBODIMENTS

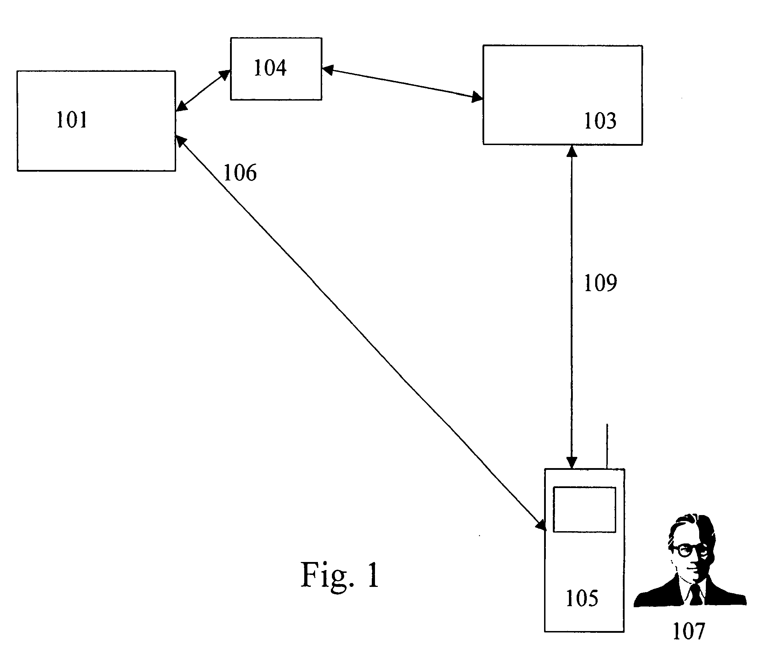

**Figure 1** is a block diagram illustrating an exemplary electronic ticketing system. The ticketing system can be any kind of ticketing system such as a movie company selling movie tickets, a bus company selling bus tickets, an airline company selling air tickets, etc. Accordingly, the tickets can be any kind of event tickets such as movie tickets, air tickets, bus tickets, etc.
The ticketing system is suitable for ticket systems handling tickets that are valid during a time interval, so-called season tickets or valid for a number of events, so-called multiple event tickets, but can be used for any kind of ticket system wherein the claim for security is high.
The ticketing system is built on public key cryptography, e.g. on Public Key Infrastructure (PKI), to attain security in the system.
The system comprises a ticket-issuing unit **101,** a ticket-receiving unit **103,** an authorised signing unit **104** and a user terminal **105,** which is used by a user **107.**

### User terminal 105

The user terminal **105** is the entity that receives the ticket from the issuer and makes use of it by submitting it to the ticket-receiver. The user terminal **105** may be a mobile phone, a Personal Digital Assistance (PDA), a laptop etc. An example of a user **107** is a person that wishes to see a movie at a cinema. The user terminal **105** comprises a user agent that is capable of handling and storing of electronic ticket data. The user terminal **105** has a PKI key pair, i.e. a private and a public key.
In order to protect the system from a copy attack, it should be undesirable for the user to spread the private key. Therefore, this system may use a key of some significance to the user, preferably requiring a certificate. The private key is to be coupled to a certificate that is issued by an entity that the system trusts for issuing of user certificates. Preferably, the certificate would be the same as the one that is normally used to identify the user. This would make it extremely inconvenient for the user to attempt a copy attack since he then allows, whatever friend he gives that private key to, complete access to all information about him.

### Authorised signing unit 104

An authorised signing unit **104** is an entity that is a part of the electronic ticketing system. The authorised signing unit **104** is appointed by the system to sign certificates to be issued to and trusted by the units within the system. I.e. the authorised signing unit **104** constitutes a trusted root in the system. It may be a separate unit or co-located with the ticket-issuing unit **101** or the ticket-receiving unit **103.**
There is a trust relation between the ticket-issuing unit **101** and the ticket-receiving unit **103.** The ticket-receiving unit **103** needs to have the public key of the ticket-issuing unit **101.** This can be achieved by providing the ticket-receiving unit **103** with a certificate signed by the authorised signing unit **104,** which certificate contains the public key of the ticket-issuing unit **101** or actually programming the signed public key into the ticket-receiving unit **103.**

### Ticket-issuing unit 101

The ticket-issuing unit **101** is the entity that creates a ticket.
It is important for the user **107** to know that the ticket-receiving unit **103** is a trusted unit in particular if the user **107** shall let the ticket-receiving unit **103** invalidate his season or multiple event ticket, which has expired. According to a first embodiment of the present invention, this is provided by means of that the ticket-issuing unit **101** has a certificate, which is signed by authorised signing unit **104.** The ticket-receiving unit **103** has means to verify this certificate based on the key it is signed by.
According to a second embodiment of the present invention, of the present invention the ticket-issuing unit **101** stores identifiers for the valid ticket-receiving units in which a specific ticket can be received in the ticket data. How this is used will be described later on.

### Ticket-receiving unit

The ticket-receiving unit **103** is the entity that collects the ticket from the user terminal **105** when the user **107** attempts to gain access based on the ticket. The ticket-receiving unit **103** is accessible **106** by the user terminal **105** and the user terminal **105** is accessible **106** by the ticket-receiving unit **103,** via a local area network over e.g. a local link protocol **109.** It is typically a wireless access. E.g. a bus can have such a ticket-receiving unit **103** close to the entry of the bus so that a user **107** that enters the bus can get access to the ticket-receiving unit **103** for delivering the ticket.
The user **107** desires to find out if the user terminal **105** has any relevant ticket to deliver to that ticket-receiving unit **103.** Therefore the ticket-receiving unit **103** according to the first embodiment is provided with the certificate of the ticket-issuing unit **103** as mentioned above. How this is used will be described later on.
The ticket-receiving unit **103** is further provided with an own certificate signed by the authorised signing unit **104.**
The ticket-receiving unit **103** has means for receiving a ticket data packet from a user terminal **105,** said ticket data packet comprising the public key of the user terminal **105.** The ticket-receiving unit **103** needs to verify that the user terminal has access to the private key matching this public key. If the ticket-receiving unit **103** can achieve this, it knows that the user terminal **105** has both sides of the key and thus should be the one it claims to be. This is accomplished by a challenge-response mechanism, which the ticket-receiving unit **103** has means to perform. How this is performed will also be described later on.

The system handles data that is received over a wide area network, typically the Internet, by a user terminal **105** for the purpose of transferring that data at a later point in time over e.g. a local link protocol to the ticket-receiving unit **103.** This can typically be implemented in mobile terminals and made available to the ticketing applications.

### Ticket Issuing

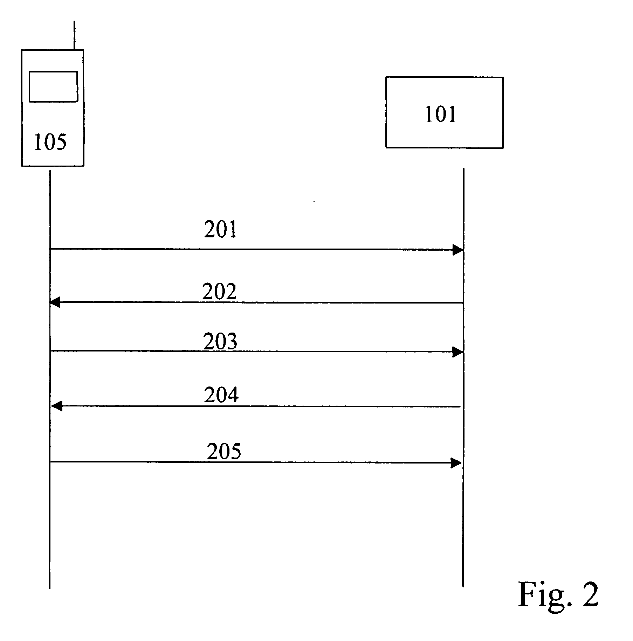

An example of the ticket issuing proceedings will now be described referring to the signaling sequence diagram shown in **Figure 2.** The proceedings include the following steps:
**201.** The user terminal **105** accesses to the ticket-issuing unit 101 and requests a ticket. Alternatively the ticket-issuing unit **101** may perform the initiation.
**202.** The ticket-issuing unit **101** sets up a protected connection to the user terminal 105. In this channel, the transaction shall take place. The ticket-issuing unit 101 requests the public key from the user agent in the user terminal 105.
**203.** The user agent in the user terminal 105 sends the public key to the ticket-issuing unit 101.
**204.** The ticket-issuing unit 101 verifies the correctness of the ticket request. It then generates a ticket with data as specified in the purchase, e.g. the time that the ticket is valid or the number of events that the ticket is valid for. The data may contain a clear-text part and an encrypted part. The intention of the clear text part is to make it possible to provide a good user interface at the user terminal. According to the second embodiment, the data further contains a list of identifiers associated to some or each of the valid ticket-receiving units wherein the ticket may be used. The ticket-issuing unit 101 appends the user's public key to the ticket, which constitutes a ticket data package comprising the user's public key, and the ticket. The ticket-issuing unit 101 then signs the ticket data package and sends the signed ticket data package to the user terminal 105. This means that, the ticket-issuing unit 101 acts as a local Certificate Authority (CA) for the ticket system.
**205.** The user terminal 105 obtains the signed ticket data and sends an acknowledgement message to the ticket-issuing unit 101.

### Ticket Usage

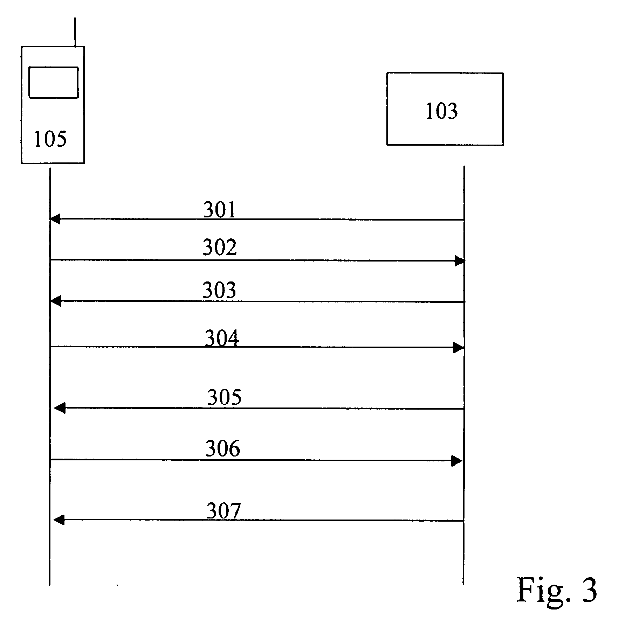

An example of the ticket usage proceedings will now be described referring to the signaling sequence diagram shown in **Figure 3.** The proceedings include the following steps:
**301.** When the user 107 and the user terminal 105 is in range of the ticket receiving unit 103, the ticket receiving unit 103 sends out an invitation message for ticket usage, said message comprising the certificate of the ticket-receiving unit 103 mentioned above. The certificate is to be used to prove of identity of the ticket-receiving unit 103.
   According to the first embodiment of the present invention, this message further comprises the certificate of the ticket-issuing unit 101 mentioned above. Alternatively the user terminal 105 may perform the initiation.
**302.** The client of the user terminal 105 uses, according to the first embodiment, the certificate of the ticket-issuing unit 101 to search for any matching tickets.
   According to the second embodiment of the present invention, the identity of the ticket-receiving unit 103 is validated towards the list of valid ticket-receivers contained in the ticket. In both embodiments, the obtained certificate of the ticket-receiving unit 103 is used for proving of the identity of the ticket-receiving unit 103. If the user terminal 105 has relevant data, i.e. a ticket to deliver and the ticket-receiving unit 103 is found trustable, it will continue the communication.
   Otherwise the communication is terminated here. If the communication is continued, the client then transmits the by the ticket-issuing unit signed ticket data packet, containing the ticket and the user terminal's 105 public key, to the ticket-receiving unit 103. The transmission of the ticket data packet to the ticket receiver can be done automatically or be configured to require user acceptance.
   The ticket-receiving unit 103 verifies the signature generated by the ticket-issuing unit 101. The public key of the user has now been received in a safe way. Since this was contained in the ticket data that was signed by the ticket-issuing unit 101, it is verified that it is the same public key that was provided by the user terminal 105 to the ticket-issuing unit 101, when the ticket was issued. The ticket-receiving unit 103 now needs to verify that the user terminal has access to the private key matching this public key. If the ticket-receiving unit 103 can achieve this, it knows that the user terminal 105 has both sides of the key and thus should be the one it claims to be. This is accomplished by a challenge-response mechanism. The challenge part implies that the ticket-receiving unit 103 generates a challenge in the form of a random data package e.g. a number or string, and might append some other data, for instance the date and time to it. The ticket-receiving unit 103 encrypts this data with the obtained public key of the user, and sends it to the user terminal 105.
**303.** The response part implies that the user terminal 105 receives said data and decrypts the challenge by using its private key and returns the decrypted data to the ticket-receiving unit 103
**304.** If the ticket-receiving unit 103 can verify that the response contains the same data that was sent in encrypted form in the challenge, the user identity has been settled. The ticket-receiving unit 103 verifies the ticket data. If the ticket is still valid the user is granted access based on the ticket, and sends a ticket reception acknowledge to the user terminal 105.

### Ticket revocation of a season or multiple event ticket

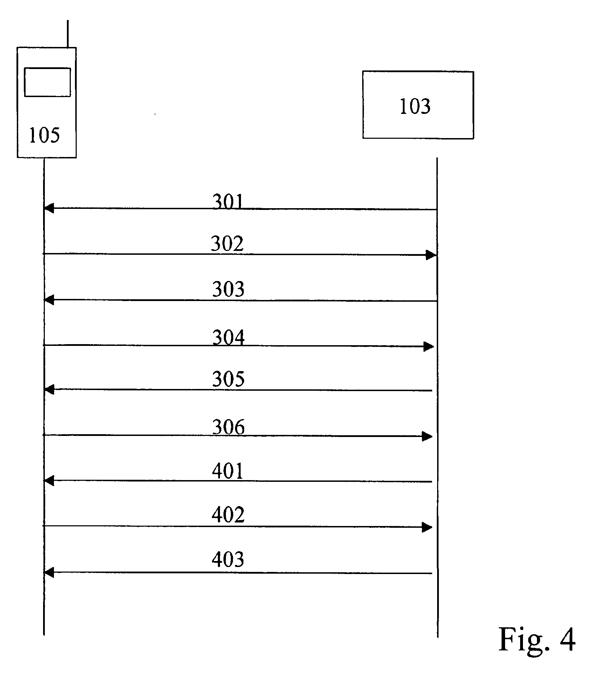

An example of ticket revocation proceedings will now be described referring to the signaling sequence diagram shown in **Figure 4.** A season ticket is valid until a certain time limit has passed. As stated earlier, this could be hours, day or whatever. A multiple event ticket is valid for a predetermined number of events. When the ticket has expired, i.e. time limit or the number of events are exceeded, the ticket receiver will not accept the ticket anymore. If tickets are not revoked, there is a potential problem that the user's ticket storage gets filled with expired tickets and the added complexity of several matching tickets for a ticket receiver, only some or one of which would be valid.
Assume that the user attempts to get on the subway and his ticket storage contains a number of expired tickets. Since the client cannot be trusted to have a correct notion of the current time, it can really not decide that a ticket has expired. In the extreme case, the client would then need to keep trying different tickets that match the ticket receiver to see if one of them is valid. It would be far simpler if the ticket receiver told the client when the ticket has expired.
Assume that the user is responsible of renewing his tickets. This means that the user would know when it is time to buy a new ticket for the particular event, e.g. the subway. The user can buy a new ticket whenever he wants to and does not need to wait for the old one to expire. Also assume that the act of buying a new ticket is not implemented by simply prolonging the validity of the existing one.
In order to maintain consistency, the following revocation proceedings may be used, after performing steps 301-306 as described above:
**401.** The ticket-receiving unit 103 has now verified the identity of the user. The ticket-receiving unit 103 verifies the ticket data. This time the ticket-receiving unit 103 finds that the ticket has expired. It therefore sends a ticket revocation message to the user terminal 105.
**402.** The user terminal 105 notifies the fact that the ticket has expired and sends a ticket invalidation acknowledgement to the ticket-receiving unit 103. The user terminal 105 may mark the ticket as invalid and move it to a secondary file of old tickets that the user can keep as reference or simply delete it.
**403.** The ticket-receiving unit 103 invites the user terminal 105 to render a valid ticket.
**404.** The user terminal 105 then tries to send another ticket to the ticket-receiving unit 103, and if this ticket is valid the procedure will continue from step 307 described above.

The method is implemented by means of a computer program product comprising the software code means for performing the steps of the method. The computer program product is run on a computer stored in a user terminal, a ticket-issuing unit and a ticket-receiving unit, within the electronic ticketing system. The computer program is loaded directly or from a computer usable medium, such as a floppy disc, a CD, the Internet etc

The present invention is not limited to the above-described preferred embodiments. Various alternatives, modifications and equivalents may be used. Therefore, the above embodiments should not be taken as limiting the scope of the invention, which is defined by the appending claims.

## Claims

1. Method for handling an electronic ticket within a electronic ticketing system, said system using public key cryptography, and said system comprising a user terminal (105) having a private key and a public key associated to each other, the method comprising the following steps:
- *delivering* the public key of the user terminal (105) to a ticket issuing unit (101);
- the ticket-issuing unit (101) *combining* said public key with a ticket, which combined key and ticket constitutes a ticket data package;
- the ticket-issuing unit (101) *signing* said ticket data package;
- the ticket-issuing unit (101) *sending* said signed ticket data package to the user terminal (105);
- the user terminal (105) *sending* said signed ticket data package to a ticket receiving-unit (103);
- the ticket receiving-unit (103) *obtaining* said public key comprised in the received signed ticket data package;
- *encrypting* a challenge data by means of said public key;
- *sending* said challenge data to the user terminal (105) for the purpose of verifying the user terminal (105);
- the user terminal (105) *decrypting* said encrypted challenge data by means of the private key of the user terminal (105);
- *sending* said the decrypted challenge data to the ticket-receiving unit (103); and
- the ticket-receiving unit (103) *accepting* the ticket if the obtained decrypted challenge data is the same as the challenge data before encrypting it and if the ticket is valid.

2. The method according to claim 1, wherein the ticket-receiving unit (103) has a certificate, signed by an authorised signing unit (104), the method comprising the further step to be taken before the step of, user terminal (105) sending said signed ticket data package to a ticket receiving-unit (103):
- the ticket-receiving unit *sending* an invitation message to the user terminal (105), said message comprising the certificate of the ticket-receiving unit (103).

3. The method according to claim 2, wherein the user terminal (105) uses the obtained certificate of the ticket-receiving unit (103) to verify the identity of the ticket-receiving unit (103).

4. The method according to any of the claims 1-3, wherein the invitation message further comprises a certificate of the ticket-issuing unit (101).

5. The method according to claim4, comprising the further step to be taken by the user terminal (105):
- *checking* whether it has any relevant ticket to deliver to the ticket-receiving unit (103), by means of the obtained certificate of the ticket-issuing unit (101).

6. The method according to any of the claims 2-3, wherein the ticket data package further comprises a list of valid ticket-receiving units in which the ticket may be received.

7. The method according to claim 6, comprising the further step to be taken by the user terminal (105):
- *checking* the certificate of the ticket-receiving unit (103) against the list of valid ticket-receiving units to identify the ticket-receiving unit (103).

8. The method according to any of the claims 1-7, comprising the further step to be taken by the ticket-receiving unit (103):
- *sending* a ticket revocation message to the user terminal (105), when finding out that the ticket has expired.

9. The method according to claim 8, comprising the further step of:
- *marking* the ticket as invalid; and
- *storing* the invalid ticket in a file for invalid tickets within the user terminal.

10. The method according to any of the claims 8-9, comprising the further step of:
- *sending* a message to the user terminal (105), comprising an invitation to render a valid ticket.

11. A computer program product directly loadable into the internal memory of a computer within a ticket-issuing unit, a ticket receiving unit and a user terminal in an electronic ticketing system system, comprising the software code means for performing the steps of any of the claims 1-10.

12. A computer program product stored on a computer usable medium, comprising readable program for causing a computer in a ticket-issuing unit, a ticket receiving unit and a user terminal in an electronic ticketing system, to control an execution of the steps of any of the claims 1-10.

13. Electronic ticketing system using public key cryptography, the system comprising a user terminal (105) having a private key and a public key associated to each other, a ticket-issuing unit communicating with the user terminal for issuing a ticket to the user terminal, and a ticket-receiving unit communicating with the user terminal for receiving a ticket from the user terminal, **characterized in that**
the user terminal (105) comprises means for delivering the public key to the ticket-issuing unit (101) and means for sending the signed data package to the ticket-receiving unit (103), the user terminal (105) further comprising means for decrypting an encrypted challenge data by means of the private key of the user terminal (105) obtained from the ticket-receiving unit (103), and sending the decrypted challenge data back to the ticket-receiving unit, the ticket-issuing unit (101) comprises means for obtaining a public key of the user terminal (105) and means for combining said public key with a ticket, which combined key and ticket constitutes a ticket data package, and further it comprises means for signing said data package and sending it to the user terminal (105)
the ticket-receiving unit (103) comprises means for receiving a signed ticket data package from the user terminal (105) and means for obtaining said public key comprised in the received signed ticket data package, said data package comprising the ticket combined with a public key of the user terminal (105), and said data package is signed by the ticket-issuing unit (101), the ticket-receiving unit further comprising means for using said public key for encrypting a challenge data and sending said encrypted challenge data to the user terminal (105) for checking if the user terminal (105) has a private key being capable of decrypt said challenge, and means for accepting the ticket if the obtained decrypted challenge data is the same as the challenge data before encrypting it and if the ticket is valid.

14. The system according to claim 13, wherein the user terminal (105) further comprises means for obtaining a ticket data package from the ticket issuing unit (101), said ticket data packet comprising the ticket combined with the delivered public key, and said ticket data package being signed by the ticket-issuing unit (101).

15. The system according to claim 14, wherein the user terminal (105) comprises means for obtaining a message comprising an invitation to deliver the ticket to a ticket-receiving unit (103).

16. The system according to claim 15, wherein said invitation message further comprises a certificate of the ticket-receiving unit (103).

17. The system according to claim 16, wherein the user terminal (105) further comprises means for using an obtained certificate of the ticket-receiving unit (103) to verify the identity of the ticket-receiving unit (103).

18. The system according to claim 15, wherein the user terminal (105) further comprises means for checking whether it has any relevant ticket to deliver to the ticket-receiving unit (103), by means of an obtained certificate of the ticket-issuing unit (101) comprised in an invitation message from a receiving unit (103).

19. The system according to 14-16, wherein the user terminal (105) further comprises means for checking the certificate of the ticket-receiving unit (103) ??? against a list of valid ticket-receiving units, comprised in an obtained ticket data packet, to identify of the ticket-receiving unit (103).

20. The system according to any of the claims 14-19, wherein the user terminal (105) further comprises means for obtaining a ticket revocation message from the ticket-receiving unit (103), when a delivered ticket has expired.

21. The system according to any of the claims 14-20, wherein the user terminal (105) further comprises means for marking an invalid ticket as invalid;

22. The system according to any of the claims 14-21, wherein the user terminal (105) further comprises a file adapted for storing an invalid ticket.

23. The system according any of claims 14-22, wherein the ticket-issuing unit (101) further comprises means for signing said data packet and sending it to the user terminal (105).

24. The system according to any of claims 14-23, wherein the ticket-issuing unit (101) further comprises a list of valid ticket-receiving units in which a ticket may be received.

25. The system according to any of claims 14-24, wherein the ticket-issuing unit (101) further comprises means for including said list in a ticket data packet.

26. The system according to any of claims 14-25, wherein the ticket-receiving unit (103) further comprises means for receiving a, by the user terminal (105) decrypted challenge data and accepting the ticket if the received decrypted challenge data is the same as the challenge data before encrypting it and if the ticket is valid.

27. The system according to any of the claims 14-26, wherein the ticket-receiving unit (103) further comprises means for sending a message to a user terminal (105), said message comprising an invitation to deliver a ticket to the ticket-receiving unit (103).

28. The system according to claim 27, wherein said invitation message further comprises a certificate of the ticket-receiving unit (103).

29. The system according to any of the claims 27-29, wherein the ticket-receiving unit (103) has knowledge of a certificate of a ticket-issuing unit (101), which ticket-issuing unit (101) issues tickets that can be received by the ticket-receiving unit (103), and wherein it further comprises means for including said certificate of a ticket-issuing unit (101) in the invitation message.

30. The system according to any of the claims 14-29, wherein the ticket-receiving unit (103) further comprises means for checking if the received ticket has expired.

31. The system according to claim 30, wherein said invitation message further comprises means for sending a ticket revocation message to the user terminal (105), when a received ticket has expired.

32. The system according to any of the claims 30-31, wherein the ticket-receiving unit (103) further has means for sending a message to the user terminal (105), said message comprising an invitation to render a valid ticket.

## Patentansprüche

1. Verfahren zur Handhabung eines elektronischen Tickets in einem elektronischen Ticketingsystem, welches System Public-Key-Kryptografie anwendet und welches System ein Nutzerterminal (105) umfasst, das einen miteinander verbundenen privaten Schlüssel und einen öffentlichen Schlüssel hat, welches Verfahren die folgenden Schritte umfasst:
- Übermittlung des öffentlichen Schlüssels des Nutzerterminals (105) an eine Ticket-Issuing-Unit (101);
- Kombinieren des öffentlichen Schlüssels durch die Ticket-Issuing-Unit (101) mit einem Ticket, welcher kombinierte Schlüssel und das Ticket ein Ticket-Datenpaket bilden;
- Signieren des Ticket-Datenpakets durch die Ticket-Issuing-Unit (101)
- Versenden des signierten Ticket-Datenpakets durch die Ticket-Issuing-Unit (101) an das Nutzerterminal;
- Versenden des signierten Ticket-Datenpakets durch das Nutzerterminal (105) an eine Ticket-Receiving-Unit (103);
- Erhalten des im empfangenen signierten Ticket-Datenpaket enthaltenen öffentlichen Schlüssels durch die Ticket-Receiving-Unit (103) ;
- Verschlüsselung der Challenge-Daten mittels des öffentlichen Schlüssels;
- Versendung der Challenge-Daten an das Nutzerterminal (105) zur Verifizierung des Nutzerterminals (105);
- Entschlüsselung der verschlüsselten Challenge-Daten durch das Nutzerterminal (105) mit dem privaten Schlüssel des Nutzerterminals (105);
- Versendung der entschlüsselten Challenge-Daten an die Ticket-Receiving-Unit (103); und
- Akzeptieren des Tickets durch die Ticket-Receiving-Unit, falls die entschlüsselten Challenge-Daten dieselben sind wie die Challenge-Daten vor der Verschlüsselung derselben, und falls das Ticket gültig ist.

2. Verfahren nach Patentanspruch 1, wobei die Ticket-Receiving-Unit (103) ein von einer autorisierten Signiereinheit (104) signiertes Zertifikat hat, welches Verfahren als weiterer Schritt, der vor dem Schritt durchgeführt werden soll, in dem das Nutzerterminal (105) das signierte Ticket-Datenpaket an eine Ticket-Receiving-Unit (103) versendet, folgendes umfasst:
- Versendung einer Einladungsnachricht durch die Ticket-Receiving-Unit an das Nutzerterminal (105), welche Nachricht das Zertifikat der Ticket-Receiving-Unit (103) umfasst.

3. Verfahren nach Patentanspruch 2, wobei das Nutzerterminal (105) das erhaltene Zertifikat der Ticket-Receiving-Unit (103) zur Verifikation der Identität der Ticket-Receiving-Unit (103) benutzt.

4. Verfahren nach einem der Patentansprüche 1-3, wobei die Einladungsnachricht ferner ein Zertifikat der Ticket-Issuing-Unit (101) umfasst.

5. Verfahren nach Patentanspruch 4, das als weiteren, durch das Nutzerterminal (105) vorzunehmenden Schritt umfasst:
- Kontrollieren anhand des erhaltenen Zertifikats der Ticket-Issuing-Unit (101), ob es ein relevantes Ticket zur Abgabe an die Ticket-Receiving-Unit (103) hat.

6. Verfahren nach einem der Patentansprüche 2-3, wobei das Ticket-Datenpaket ferner eine Liste mit gültigen Ticket-Receiving-Units umfasst, in denen das Ticket empfangen werden kann.

7. Verfahren nach Patentanspruch 6, das als weiteren, durch das Nutzerterminal (105) vorzunehmenden Schritt umfasst:
- Kontrollieren des Zertifikats der Ticket-Receiving-Unit (103) anhand der Liste von gültigen Ticket-Receiving-Units, um die Ticket-Receiving-Unit (103) zu identifizieren.

8. Verfahren nach einem der Patentansprüche 1-7, das als weiteren, durch die Ticket-Receiving-Unit (103) vorzunehmenden Schritt umfasst:
- Versendung einer Ticket-Widerrufsnachricht an das Nutzerterminal (105), wenn es sich herausstellt, dass das Ticket ausgelaufen ist.

9. Verfahren nach Patentanspruch 8, das als weiteren Schritt umfasst:
- Markieren des Tickets als ungültig; und
- Ablegen des ungültigen Tickets in einer Datei für ungültige Tickets innerhalb des Nutzerterminals.

10. Verfahren nach einem der Patentansprüche 8-9, das als weiteren Schritt umfasst:
- Versendung einer Nachricht an das Nutzerterminal (105), die eine Einladung enthält, ein gültiges Ticket vorzuweisen.

11. Computerprogramm-Produkt, das direkt in den internen Speicher eines Computers geladen werden kann innerhalb einer Ticket-Issuing-Unit, einer Ticket-Receiving-Unit und eines Nutzerterminals in einem elektronischen Ticketing-Systemsystem, das die Software-Codemittel zur Durchführung der Schritte nach einem der Patentansprüche 1-10 umfasst.

12. Computerprogramm-Produkt, gespeichert auf einem Computer-benutzbaren Medium, das ein lesbares Programm umfasst, um einen Computer ein einer Ticket-Issuing-Unit, einer Ticket-Receiving-Unit und einem Nutzerterminal in einem elektronischen Ticketingsystem zur Kontrolle einer Durchführung der Schritte nach einem der Patentansprüche 1-10 zu veranlassen.

13. Elektronisches, Public-Key-Kryptografie anwendendes Ticketingsystem, welches System ein Nutzerterminal (105) aufweist, bei dem ein privater Schlüssel und ein öffentlicher Schlüssel einander zugeordnet sind, eine Ticket-Issuing-Unit, die mit dem Nutzerterminal kommuniziert, um ein Ticket an das Nutzerterminal abzugeben, und eine Ticket-Receiving-Unit, die mit dem Nutzerterminal kommuniziert, um ein Ticket vom Nutzerterminal zu empfangen, **dadurch gekennzeichnet, dass**
das Nutzerterminal (105) Mittel umfasst zur Ablieferung des öffentlichen Schlüssels an die Ticket-Receiving-Unit (101) und Mittel zur Versendung des signierten Datenpakets an die Ticket-Receiving-Unit (103), welches Nutzerterminal (105) ferner Mittel umfasst, um verschlüsselte Challenge-Daten mit dem privaten Schlüssel des Nutzerterminals (105) zu entschlüsseln, der von der Ticket-Receiving-Unit (103) erhalten wurde, und Rücksendung der entschlüsselten Challenge-Daten zurück an die Ticket-Receiving-Unit, wobei die Ticket-tssuing-Unit (101) Mittel zum Erhalten eines öffentlichen Schlüssels des Nutzerterminals (105) und Mittel zum Kombinieren des öffentlichen Schlüssels mit einem Ticket umfasst, welcher kombinierte Schlüssel und das Ticket ein Ticket-Datenpaket bilden, und ferner Mittel umfasst zum Signieren des Datenpakets und Versendung desselben an das Nutzerterminal (105)
die Ticket-Receiving-Unit (103) Mittel zum Empfangen eines signierten Ticket-Datenpakets vom Nutzerterminal (105) und Mittel zum Erhalten des im empfangenen signierten Ticket-Datenpaket enthaltenen öffentlichen Schlüssels umfasst, welches Datenpaket das mit dem öffentlichen Schlüssel des Nutzerterminals (105) kombinierte Ticket umfasst und das Datenpaket von der Ticket-Issuing-Unit (101) signiert ist, welche Ticket-Receiving-Unit ferner Mittel zur Benutzung des den öffentlichen Schlüssels zur Verschlüsselung von Challenge-Daten und Versendung der verschlüsselten Challenge-Daten an das Nutzerterminal (105) umfasst, um zu kontrollieren, ob das Nutzerterminal (105) einen öffentlichen Schlüssel hat, der die Challenge zu entschlüsseln vermag, und Mittel fürs Akzeptieren des Tickets, falls die erhaltenen entschlüsselten Challenge-Daten dieselben sind wie die Challenge-Daten vor der Verschlüsselung derselben, und ob das Ticket gültig ist.

14. System nach Patentanspruch 13, wobei das Nutzerterminal (105) ferner Mittel fürs Erhalten eines Ticket-Datenpakets von der Ticket-Issuing-Unit (101) umfasst, welches Ticket-Datenpaket das mit dem gelieferten öffentlichen Schlüssel kombinierte Ticket umfasst und das Ticket-Datenpaket von der Ticket-Issuing-Unit (101) signiert ist.

15. System nach Patentanspruch 14, wobei das Nutzerterminal (105) Mittel zum Erhalten einer Nachricht umfasst, die eine Einladung enthält, das Ticket an eine Ticket-Receiving-Unit (103) abzuliefern.

16. System nach Patentanspruch 15, wobei die Einladungsnachricht ferner ein Zertifikat der Ticket-Receiving-Unit (103) umfasst.

17. System nach Patentanspruch 16, wobei das Nutzerterminal (105) ferner Mittel zur Benutzung eines erhaltenen Zertifikats der Ticket-Receiving-Unit (103) zur Verifikation der Identität der Ticket-Receiving-Unit (103) umfasst.

18. System nach Patentanspruch 15, wobei das Nutzerterminal (105) ferner Mittel umfasst, um mittels eines erhaltenen Zertifikats der Ticket-Issuing-Unit (101), das in einer Einladungsnachricht von einer Ticket-Receiving-Unit (103) enthalten ist, zu kontrollieren, ob es ein relevantes Ticket zur Ablieferung an die Ticket-Receiving-Unit (103) hat.

19. System nach Patentanspruch 14-16, wobei das Nutzerterminal (105) ferner Mittel umfasst, um anhand einer Liste von gültigen Ticket-Receiving-Units, die in einem erhaltenen Ticket-Datenpaket enthalten ist, das Zertifikat der Ticket-Receiving-Unit (103) zu überprüfen, um die Ticket-Receiving-Unit (103) zu identifizieren.

20. System nach einem der Patentansprüche 14-19, wobei das Nutzerterminal (105) ferner Mittel umfasst, um eine Ticket-Widerrufsnachricht von der Ticket-Receiving-Unit (103) zu erhalten, wenn ein abgeliefertes Ticket ausgelaufen ist.

21. System nach einem der Patentansprüche 14-20, wobei das Nutzerterminal (105) ferner Mittel umfasst, um ein ungültiges Ticket als ungültig zu markieren.

22. System nach einem der Patentansprüche 14-21, wobei das Nutzerterminal (105) ferner eine Datei umfasst, die zur Speicherung eines ungültigen Tickets vorgesehen ist.

23. System nach einem der Patentansprüche 14-22, wobei die Ticket-Issuing-Unit (101) ferner Mittel umfasst, um das Datenpaket zu signieren und um es an das Nutzerterminal (105) zu versenden.

24. System nach einem der Patentansprüche 14-23, wobei die Ticket-Issuing-Unit (101) ferner eine Liste mit gültigen Ticket-Receiving-Units umfasst, in denen ein Ticket empfangen werden kann.

25. System nach einem der Patentansprüche 14-24, wobei die Ticket-Issuing-Unit (101) ferner Mittel umfasst, um die Liste in ein Ticket-Datenpaket einzubeziehen.

26. System nach einem der Patentansprüche 14-25, wobei die Ticket-Receiving-Unit (103) ferner Mittel umfasst zum Empfangen von durch das Nutzerterminal (103) entschlüsselten Challenge-Daten und Akzeptieren des Tickets, falls die empfangenen entschlüsselten Challenge-Daten dieselben sind wie die Challenge-Daten vor der Verschlüsselung derselben, und falls das Ticket gültig ist.

27. System nach einem der Patentansprüche 14-26, wobei die Ticket-Receiving-Unit (103) ferner Mittel zur Versendung einer Nachricht an ein Nutzerterminal (105) umfasst, welche Nachricht eine Einladung umfasst, das Ticket an die Ticket-Receiving-Unit (103) abzuliefern.

28. System nach Patentanspruch 27, wobei die Einladungsnachricht ferner ein Zertifikat der Ticket-Receiving-Unit (103) umfasst.

29. System nach einem der Patentansprüche 27-29, wobei die Ticket-Receiving-Unit Kenntnis von einem Zertifikat der Ticket-Issuing-Unit (101) hat, welche Ticket-Issuing-Unit Tickets abgibt, die von der Ticket-Receiving-Unit (103) empfangen werden können, und wobei es ferner Mittel umfasst, um das Zertifikat der Ticket-Issuing-Unit (101) in die Einladungsnachricht einzubeziehen.

30. System nach einem der Patentansprüche 14-29, wobei die Ticket-Receiving-Unit (103) ferner Mittel umfasst zur Kontrolle, ob das empfangene Ticket ausgelaufen ist.

31. System nach Patentanspruch 30, wobei die Einladungsnachricht ferner Mittel umfasst zur Versendung einer Ticket-Widerrufsnachricht an das Nutzerterminal (105), wenn ein empfangenes Ticket ausgelaufen ist.

32. System nach einem der Patentansprüche 30-31, wobei die Ticket-Receiving-Unit (103) ferner Mittel zur Versendung einer Nachricht an das Nutzerterminal (105) aufweist, welche Nachricht eine Einladung enthält, ein gültiges Ticket vorzuweisen.

## Revendications

1. Méthode pour traiter un billet électronique dans un système de billetterie électronique, ledit système utilisant une clef cryptographique publique, et ledit système comprenant un terminal utilisateur (105) ayant une clef privée associée à la clef publique, la méthode comprenant les phases suivantes :
- *délivrance* de la clef publique du terminal utilisateur (105) à une unité émettrice du billet (101) ;
- l'unité émettrice du billet (101) *combinant* ladite clef publique avec le billet, laquelle combinaison de clef et de billet constituant un paquet de données de billet ;
- l'unité émettrice de billet (101) *signant* ledit paquet de données de billet ;
- l'unité émettrice de billet *envoyant* ledit paquet de données de billet signé au terminal utilisateur (105):
- le terminal utilisateur (105) *envoyant* ledit paquet de données de billet à une unité réceptrice de billet (103) ;
- l'unité réceptrice de billet (103) *obtenant* ladite clef publique incluse dans le paquet de données de billet signé reçu ;
- *codage* d'une donnée de défi (challenge data) au moyen de la clef publique ;
- *envoi* de ladite donnée de défi au terminal utilisateur (105) pour qu'elle soit contrôlée par le terminal utilisateur (105) ;
- le terminal utilisateur (105) *décodant* la dite donnée de défi au moyen de la clef privée du terminal utilisateur (105) ;
- *envoi* de ladite donnée de défi à l'unité réceptrice du billet (103) ; et
- l'unité réceptrice du billet (103) *acceptant* le billet, si la donnée de défi décodée reçue est la même que la donnée de défi avant le codage et si le billet est valide.

2. Méthode selon la revendication 1, dans laquelle l'unité réceptrice de billet (103) a un certificat, signé par une unité de signature autorisée (104), cette méthode comprenant en plus la phase à réaliser avant la phase, le terminal utilisateur (105) envoyant ledit paquet de données de billet signé à une unité réceptrice de billet (103) ;
- l'unité réceptrice de billet *envoyant* un message d'invitation au terminal utilisateur (105), ledit message comprenant le certificat de l'unité réceptrice du billet (103).

3. Méthode selon la revendication 2, dans laquelle le terminal utilisateur (105) emploie le certificat obtenu de l'unité réceptrice de billet (103) pour vérifier l'identité de l'unité réceptrice de billet (103).

4. Méthode selon l'une quelconque des revendications 1 à 3, dans laquelle le message d'invitation comprend en plus un certificat de l'unité émettrice de billet (101).

5. Méthode selon la revendication 4, comprenant en plus la phase à effectuer par le terminal utilisateur (105) :
- *vérifier,* s'il a un billet approprié à délivrer à l'unité réceptrice de billet (103), au moyen du certificat obtenu de l'unité émettrice de billet (101).

6. Méthode selon l'une quelconque des revendications 2 à 3, dans laquelle le paquet de données de billet comprend en plus une liste des unités réceptrices de billets validées, par lesquelles le billet peut être reçu.

7. Méthode selon la revendication 6, comprenant en plus la phase à effectuer par le terminal utilisateur (105):
- *contrôle* du certificat de l'unité réceptrice de billet (103) contre la liste des unités réceptrices de billets validées, en vue de l'identification de l'unité réceptrice de billet (103).

8. Méthode selon l'une quelconque des revendications 1 à 7, comprenant en plus la phase à effectuer par l'unité réceptrice de billet (103):
- *envoi* d'un message d'annulation de billet au terminal utilisateur (105), lorsqu'elle détecte que le billet est périmé.

9. Méthode selon la revendication 8, comprenant en plus la phase suivante :
- *marquer* que le billet est invalide ; et
- *mémoriser* le billet invalide dans un fichier pour billets invalides dans le terminal utilisateur.

10. Méthode selon l'une quelconque des revendications 8 à 9, comprenant en plus la phase suivante:
- *envoi* d'un message au terminal utilisateur (105), comprenant une invitation de délivrer un billet valide.

11. Produit programme d'ordinateur chargeable directement dans la mémoire interne d'un ordinateur dans une unité émettrice de billet, une unité réceptrice de billet et un terminal utilisateur dans un système de billetterie électronique, le système comprenant le moyen d'un code logiciel permettant d'exécuter les phases selon l'une quelconque des revendications 1 à 10.

12. Produit programme d'ordinateur stocké dans un moyen utilisable par ordinateur, comprenant un programme lisible faisant que, dans une unité émettrice de billet, une unité réceptrice de billet et un terminal utilisateur d'un système de billetterie électronique, un ordinateur contrôle une exécution des phases de l'une quelconque des revendications 1 à 10.

13. Système de billetterie électronique utilisant une clef cryptographique publique, le système comprenant un terminal utilisateur (105) ayant une clef privée associée à une clef publique, une unité émettrice de billet communiquant avec le terminal utilisateur pour émettre un billet au terminal utilisateur, et une unité réceptrice de billet communiquant avec le terminal utilisateur pour recevoir un billet du terminal utilisateur, **caractérisé en ce que**
le terminal utilisateur (105) comprend un moyen pour fournir la clef publique à l'unité émettrice de billet (101) et un moyen pour envoyer le paquet de données signé à l'unité réceptrice de billet (103), le terminal utilisateur (105) comprenant en plus un moyen pour décoder une donnée de défi codée au moyen de la clef privée du terminal utilisateur (105), obtenue depuis l'unité réceptrice de billet (103), et pour renvoyer la donnée de défi décodée à l'unité réceptrice de billet,
l'unité émettrice de billet (101) comprend un moyen pour obtenir la clef publique du terminal utilisateur (105) et un moyen pour combiner ladite clef publique avec le billet, laquelle clef combinée et le billet constituant un paquet de données de billet, et qui comprend en plus un moyen pour signer ledit paquet de données de billet et l'envoyer au terminal utilisateur (105),
l'unité réceptrice de billet (103) comprend un moyen pour recevoir un paquet de données de billet signé depuis le terminal utilisateur (105) et un moyen pour obtenir ladite clef publique incluse dans le paquet de données de billet signé reçu, ledit paquet de données comprenant le billet combiné avec une clef publique du terminal utilisateur (105), et ledit paquet de données est signé par l'unité émettrice de billet (101), l'unité réceptrice de billet comprenant en plus un moyen pour utiliser ladite clef publique pour coder une donnée de défi et pour envoyer ladite donnée de défi codée au terminal utilisateur (105) afin de vérifier, si le terminal utilisateur (105) a une clef privée capable de décoder ledit défi, et un moyen pour accepter le billet, si la donnée de défi décodée obtenue est la même que la donnée de défi avant le codage et si le billet est valide.

14. Système selon la revendication 13, dans lequel le terminal utilisateur (105) comprend en plus un moyen pour obtenir le paquet de données de billet depuis l'unité émettrice de billet (101), le paquet de données de billet comprenant un billet combiné avec la clef publique délivrée, et ledit paquet de données de billet étant signé par l'unité émettrice de billet (101).

15. Système selon la revendication 14, dans lequel le terminal utilisateur (105) comprend un moyen pour obtenir un message comprenant une invitation de délivrer le billet à l'unité réceptrice de billet (103).

16. Système selon la revendication 15, dans lequel ledit message d'invitation comprend en plus un certificat de l'unité réceptrice de billet (103).

17. Système selon la revendication 16, dans lequel le terminal utilisateur (105) comprend en plus un moyen pour utiliser un certificat obtenu de l'unité réceptrice de billet (103) pour contrôler l'identité de l'unité réceptrice de billet (103).

18. Système selon la revendication 15, dans lequel le terminal utilisateur (105) comprend en plus un moyen pour contrôler, s'il a un billet approprié à délivrer à l'unité réceptrice de billet (103), au moyen d'un certificat obtenu de l'unité émettrice de billet (101) inclus dans un message d'invitation venu de l'unité réceptrice de billet (103).

19. Système selon l'une quelconque des revendications 14 à 16, dans lequel le terminal utilisateur (105) comprend en plus un moyen pour vérifier le certificat de l'unité réceptrice de billet (103) au regard d'une liste d'unités réceptrices de billet validées, compris dans un paquet de données de billet obtenu, pour identifier l'unité réceptrice de billet (103).

20. Système selon l'une quelconque des revendications 14 à 19, dans lequel le terminal utilisateur (105) comprend en plus un moyen pour obtenir un message d'annulation de billet depuis l'unité réceptrice de billet (103), lorsqu'un billet délivré est périmé.

21. Système selon l'une quelconque des revendications 14 à 20, dans lequel le terminal utilisateur (105) comprend en plus un moyen pour marquer qu'un billet invalide comme invalide.

22. Système selon l'une quelconque des revendications 14 à 21, dans lequel le terminal utilisateur (105) comprend en plus un fichier adapté pour mémoriser le billet invalide.

23. Système selon l'une quelconque des revendications 14 à 22, dans lequel l'unité émettrice de billet (101) comprend en plus un moyen pour signer ledit paquet de données et pour l'envoyer au terminal utilisateur (105).

24. Système selon l'une quelconque des revendications 14 à 23, dans lequel l'unité émettrice de billet (101) comprend en plus une liste d'unités réceptrices de billet validées dans lesquelles un billet peut être reçu.

25. Système selon l'une quelconque des revendications 14 à 24, dans lequel l'unité émettrice de billet (101) comprend en plus un moyen pour inclure ladite liste dans un paquet de données de billet.

26. Système selon l'une quelconque des revendications 14 à 25, dans lequel l'unité réceptrice de billet (103) comprend en plus un moyen pour recevoir une donnée de défi décodée par le terminal utilisateur (105) et pour accepter le billet, si la donnée de défi décodée reçue est la même que la donnée de défi avant son codage et si le billet est valide.

27. Système selon l'une quelconque des revendications 14 à 26, dans lequel l'unité réceptrice de billet (103) comprend en plus un moyen pour envoyer un message au terminal utilisateur (105), ledit message comprenant une invitation pour délivrer un billet à l'unité réceptrice de billet (103).

28. Système selon la revendication 27, dans lequel ledit message d'invitation comprend en plus un certificat de l'unité réceptrice de billet (103).

29. Système selon l'une quelconque des revendications 27 à 28, dans lequel l'unité réceptrice de billet (103) a la connaissance d'un certificat d'une unité émettrice de billet (101), laquelle unité émettrice de billet (101) émet des billets qui peuvent être reçus par l'unité réceptrice de billet (103), et dans lequel il y a en plus un moyen pour inclure ledit certificat d'une unité émettrice de billet (101) dans le message d'invitation.

30. Système selon l'une quelconque des revendications 14 à 29, dans lequel l'unité réceptrice de billet (103) comprend en plus un moyen pour vérifier, si le billet reçu est périmé.

31. Système selon la revendication 30, dans lequel ledit message d'invitation comprend un plus un moyen pour envoyer un message d'annulation de billet au terminal utilisateur (105), lorsqu'un billet reçu est périmé.

32. Système selon l'une quelconque des revendications 30 à 31, dans lequel l'unité réceptrice de billet (103) a en plus un moyen pour envoyer un message au terminal utilisateur (105), lequel message comprenant une invitation de délivrer un billet valide.
